# EUROPEAN PATENT APPLICATION

(11) **EP 0 838 944 A1**
(43) Date of publication of application: **29.04.1998**
(21) Application number: 96117026.3
(22) Date of filing: 23.10.1996
(51) Int. Cl.: H04N 5/44, H04N 7/088

(54) **TV receiver with teletext function**

(71) Applicant: SONY-WEGA PRODUKTIONS GmbH, 70736 Fellbach (DE)
(72) Inventor: Endress, Wolfgang, Dipl.-Ing., 71364 Winnenden (DE)
(74) Representative: Müller, Frithjof E., Dipl.-Ing.

(57) **Abstract**

To display one page of teletext picture and one video picture or two different pages of teletext pictures simultaneously on a television screen having a wide aspect ratio of 16:9 in a 100 Hz flickerless mode, the R/G/B teletext signals each having a bandwidth of 10 MHz get level adapted from R/G/B level to TTL level to undergo a necessary digital signalprocessing, instead of being analog to digital converted like the Y/U/V video signals. After the signalprocessing the teletext signals get level adapted from TTL level to R/G/B level to be displayed, instead of being digital to analog converted like the Y/U/V video signals.

## Description

The invention relates to a television receiver displaying two flickerless pictures on its screen simultaneously, at least one of these pictures can be a teletext picture.

It is known from EP 0 656 727 A1 of the same applicant to display two different pictures side by side without overlapping each other on the screen and at least one of these pictures can be a page of teletext picture.

On the other hand, it is known from EP 0 717 562 A1 to display two flickerless pictures produced from two independent video or television signals substantially in the same size side by side on the screen of a television receiver by using field memories.

However, when simultaneously displaying one normal video picture and one page of teletext picture or more than one page of teletext picture on the screen in the flickerless condition, the circuit configuration according to EP 0 7171 562 A1 used for normal video pictures can not be used as it is. If teletext picture signals with a relatively high bandwidth of 10 MHz are supplied to the field memories through A/D converters with anti-aliasing filters which have relatively lower pass-bandwidths of around 5 MHz and 1,25 MHz corresponding to luminance and chrominance signals representing a normal video picture, it would lead to picture deterioration in picture quality of the teletext.

It is therefore an object of the invention to provide a TV receiver with teletext function which is able to display two independent flickerless pictures on its screen, at least one of these pictures is a teletext picture.

This object is achieved with the TV receiver according to claim 1 and the method for displaying television pictures according to claim 11. Preferred embodiments of the invention are defined in the respective sub-claims.

The invention is based on the fact that the R/G/B signals of the teletext picture need not to be A/D converted because they represent only an ON- or an OFF-state. Therefore, after a level adaption from R/G/B level to e.g. TTL level, these signals can directly be written into a field memory used for displaying one or more flickerless teletext pictures on the screen.

According to the invention, parts of a field memory or the whole field memory is used which is available in the picture signal processor used to display one or two flickerless pictures on the screen of the TV receiver.

A television receiver according to the invention can display two flickerless pictures simultaneously on its screen in a same size or similar sizes, at least one of these pictures can be a teletext picture.

The invention will now be described by way of examples and with reference to the accompanying drawings, in which:
**Fig. 1** is a schematic block diagram showing an example of a television receiver in accordance with the invention:
**Fig. 2** is an schematic block diagram showing a signal processor for 100 Hz flickerless picture mode and double picture mode in the picture processor of the television receiver shown in Fig. 1; and
**Figs. 3A and 3B** are schematic diagrams showing examples of display in double picture mode of the television receiver according to the invention.

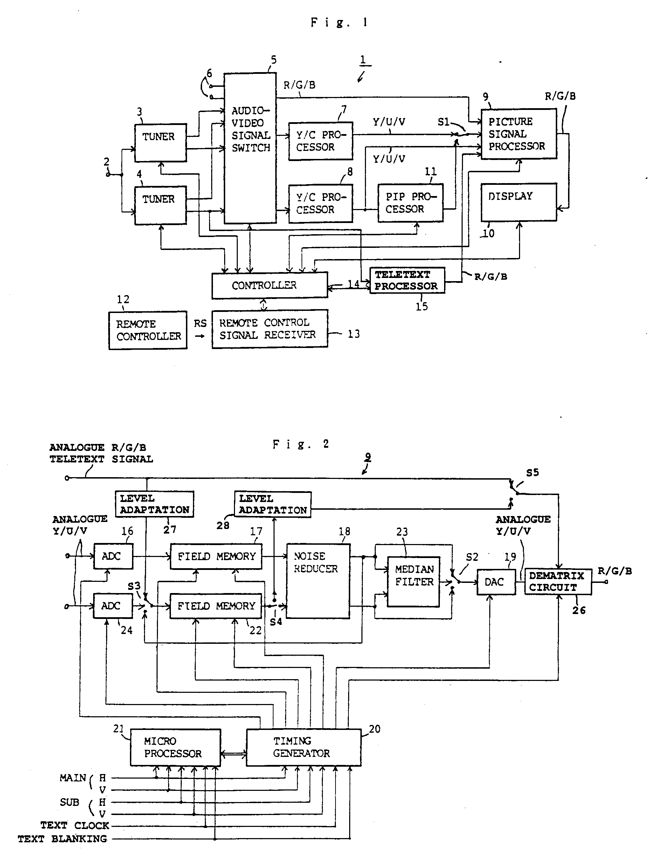

Referring to Fig. 1, the construction of the television receiver 1 is now explained. Apart from the teletext function, which is not available according to the EP 0 717 562 A1, this television receiver 1 has basically the same functionality as the known one described in the EP 0 717 562 A1, therefore, only the basic functions necessary to understand the present invention are described hereinafter.

The television receiver 1 has an antenna input 2, which is connected to one or more tuners 3 and 4 each including a video IF signal demodulator and an audio signal demodulator so that one or more composite video signals and accompanying audio signals are obtained, respectively. The tuners 3 and 4 are connected to the audio and video signal switcher (hereinafter, AV switcher) 5 and provide the latter with the composite video signals and audio signals. Auxiliary audio and video signal inputs (hereinafter, AV input) 6 are also provided for selection by the AV switcher 5. Therefore, the AV switcher 5 supplies the following circuits with two composite video signals and accompanying audio signals selected among those input signals. One or more audio signals selected by the AV switcher 5 are supplied to a sound signal processor, though not illustrated. The audio signal is irrelevant to the invention and its explanation is omitted. Further, at least one of the tuners 3 and 4 is connected to a teletext processor 15. If two pages of teletext pictures produced from television signals transmitted from different stations should be simultaneously displayed side by side on the screen, an additional teletext processor should be provided to be connected with the other of the tuners 3 and 4 or the teletext processor 15 should be able to decode the teletext signals from the tuners 3 and 4.

Two composite video signals selected by the AV switcher 5 are supplied to the luminance and chrominance signal processors (hereinafter, Y/C processor) 7 and 8, respectively, in which the respective composite video signals are converted to respective luminance signals Y and color difference signals U and V (as a set of these signals Y, U and V, hereinafter, Y/U/V signals). The TV signals Y, U, V have bandwidths of 5 MHz, 1,25 MHz and 1,25 MHz, respectively. A composite video signal which is selected by the AV switcher 5 to be displayed as a single picture in normal display mode or the main picture In picture-in-picture [hereinafter PIP) mode is supplied through the Y/C processor 7 and a fast switch S1 to the picture processor 9, in which the Y/U/V signals are subjected to necessary signal process and desired adjustments of picture quality, and from which the video picture signal in a R/G/B form is supplied to the display apparatus 10. One of the video signals supplied to the AV input 6 may be R/G/B signals. In this case, the R/G/B signals selected by the AV switcher 5 are directly supplied to the picture signal processor 9 in which a R/G/B to Y/U/V converter is provided, though it is not illustrated. Further, the teletext processor 15 supplies R/G/B teletext signals to the picture signal processor 9, each having a bandwidth of 10 MHz.

The PIP processor 11 is irrelevant to this invention and the explanation will be omitted, as the same explanation in EP 0 717 562 A1 can be applied.

The television receiver 1 is further provided with a remote controller 12 for controlling manipulation thereof through a remote control signal receiver 13 included in the television receiver 1. The remote control signal receiver 13 receives control signals RS from the remote controller 12 which are decoded and supplied to a controller 14 for generally controlling the television receiver 1.

The television signal of the normal PAL system has the frame frequency of 25 Hz, the field frequency of 50 Hz, the effective line number of 575 in one frame, the line frequency of 15,625 kHz, the vertical or field scan speed of 20 ms/field and the line scan speed 64 µs/line. The teletext processor 15 can supply R/G/B teletext signals for one page of teletext picture with a line frequency of 31,5 kHz and a field frequency of 100 Hz or for two different pages of teletext pictures at the same time with a line frequency of 15,625 kHz and a field frequency of 50 Hz. In this embodiment, however, the television receiver 1 can generate and display not only one or two flickerless video pictures as disclosed in EP 0 717 562 A1, but also one or two flickerless teletext pictures at the field frequency of 100 Hz from a teletext signal from the teletext processor 15.

Fig. 2 shows a schematic block diagram of the main part of the signal processor 9 for 100 Hz flickerless picture mode shown in Fig. 1. The signal processor 9 includes the analog to digital converters (hereinafter, ADC) 16 and 24, the field memories 17 and 22, the noise reduction circuit 18, the digital to analog converter (hereinafter, DAC) 19, the dematrix circuit 26, the timing generator 20 and the micro processor 21. The last two may be included in the controller 14 in Fig. 1. A noise reduction circuit 18 is irrelevant to the invention and its explanation will be omitted.

The operation of this circuit in the normal single picture mode and in the PAP mode (=Picture and Picture mode) where one or two normal video or television pictures are displayed is already detailed explained in EP 0 717 562 and therefore only the basic operation will be explained in the following.

Analog Y/U/V signals having the field frequency of 50 Hz from the Y/C processor 7 are supplied to the ADC 16 to be converted into corresponding digital Y/U/V signals by sampling and digitizing each into 8 bits in accordance with a clock signal of 13,5 MHz for example supplied from the timing generator 20 though as an alternative, 16 MHz for example or other clock frequency may be chosen in accordance with system requirements. In practice, however, the luminance signal Y is digitized into 8 bits at the sampling frequency of 13,5 MHz and the color difference signals U and V are digitized into 8 bits at another sampling frequency of 13,5/4 MHz equal to 3,375 MHz, respectively in consideration of band width ratio of respective signals Y, U and V, 4:1:1. The digital color difference signals U and V are divided into four sets of 2 bits, respectively and combined with the digital luminance signal Y, so that each digital luminance signal Y of 8 bits, each divided 2 bits of the digital color difference signal U and each divided 2 bits of the digital color difference signal V constitute one word of 12 bits. Therefore, the analog Y/U/V signals for each effective line scan duration of 52 µs or more are digitized into around 704 or more words In case of the a clock signal of 13,5 MHz. The number of words are selected preferably as a multiple of four, for example 720 words, from the above reason. The ADC 16 may include three separate analog digital converters for processing the Y/U/V signals separately or one or two analog digital converters for processing the Y/U/V signals in a time sharing manner.

The field memory 17 may be constructed as a dual port field memory having a random access block addressing mode or as a dual port field memory operating like FIFO (First In First Out) serial register. The field memory 17 has, for example, a capacity of 245,760 words and can be written and read data asynchronously under the control of its write and read control signals. More specifically, the field memory 17 has terminals for signals for data input, data output, write control including reset write, input enable, write enable and write clock, and read control including reset read, output enable, read enable and read clock, respectively. After a reset operation for an internal write address pointer by the reset write signal, data provided to the data input terminal can be sequentially written into the storage cells designated by the write address pointer which is incremented in accordance with the write clock signal while the input enable and write enable signals are effective, and after a reset operation for an internal read address pointer by the reset read signal, the stored data can be sequentially read out to the data output terminal from the storage cells designated by the read address pointer which is incremented in accordance with the read clock signal while the output enable and read enable signals are effective.

The digital Y/U/V signals of each field, for example, around 285 effective lines only which constitute 205,200 words in a case of the sampling frequency of 13,5 MHz are sequentially written into the field memory 17 for each 20 ms, with the write clock signal having the same frequency of the clock signal of the ADC 16 and supplied from the timing generator 20 and the same Y/U/V signals stored in the field memory 17 are sequentially read out for 10 ms, but twice for 20 ms with the read clock signal of 27 MHz, which is a double of the frequency of the write clock signal, supplied from the timing generator 20, so that digital Y/U/V signals having the field frequency of 100 Hz are generated. While the digital Y/U/V signals of each odd field A are read out from the field memory 17 for the second time, simultaneously the digital Y/U/V signal of each even field B are written into the field memory 17 and vice versa.

The digital Y/U/V signals read out from the field memory 17 are supplied through the noise reduction circuit 18 and the switch circuit S2, if provided, to the DAC 19 so as to be converted into analog Y/U/V signals having the field frequency of 100 Hz with a clock signal of 27 MHz, which is the same frequency of the read clock signal of the field memory 17, supplied from the timing generator 20. The analog Y/U/V signals are then converted to R/G/B signals by the dematrix circuit 26 and then fed to the display apparatus 10 which scans horizontally each line at the line scan speed of 32 µs/line among which the effective line scan duration corresponding to the Y/U/V signals from the DAC 19 is 26 µs, the line frequency of 31,25 KHz and vertically each odd field twice for 20 ms and each even field twice for 20 ms at the field frequency of 100 Hz on its screen.

The clock signal for the ADC 16, the write control signals and the read control signals for the field memory 17 and the clock signal for the DAC 19 are generated by the timing generator 20 and the micro processor 22 in synchronism with the horizontal and vertical synchronizing signals of the composite video signal selected by the AV switcher 5 in Fig. 1, which are supplied to the timing generator 20 and the micro processor 21 as shown in Fig. 2. In practice, there may be small circuit delay in each operation, however it will be compensated in the total system.

The above operation creats A, A, B and B sequence of fields. There are other types of sequence of fields possible.

If only a single page of teletext picture should be displayed in the flickerless picture mode on the screen, the R/G/B teletext signal of this teletext page obtained from the teletext processor 15 can be used directly, since it already has a line frequency of 31,5 kHz and a field frequency of 100 Hz. Therefore, the R/G/B teletext signal supplied from the teletext processor 15 in a sequence of, for example, odd, odd, even, even is fed (via the switch circuit S5) to the dematrix circuit 26, which is controlled by the micro processor 21 and the timing generator 20, which also receives a text blanking signal and a text clock signal from the teletext processor 15, to directly supply this signal to the display apparatus 10.

To display two different pictures (PAP mode = Picture And Picture mode), the signal processor 9 further uses, as shown in Fig. 2, the ADC 24, the field memory 22 which may have the same construction as the field memory 17, the median filter 23, and the switch circuit S3.

In the embodiment, double picture mode can be selected from an on-screen menu displayed by manipulating certain keys of the remote controller in a predetermined sequence. In the double picture mode, two different motion or still pictures can be simultaneously displayed in one screen. To realize this mode, in the signal processor 15, a further ADC 24 which is the same as or similar to the ADC 16 is connected to the field memory 22 through the switch circuit S3, as shown in Fig. 2, and supplied with analog Y/U/V signals from the Y/C processor 8 before the PIP processor 11 as shown in Fig. 1.

Therefore, the analog Y/U/V signals from the Y/C processor 7 for the main picture I (hereinafter, picture I) selected by the AV switcher 5 in Fig. 1 are supplied to the ADC 16 and the analog Y/U/V signals from the Y/C processor 8 for the sub-picture II (hereinafter, picture II) selected by the AV switcher 5 in Fig. 1 are supplied to the ADC 24. In this embodiment, each of the ADCs 16 and 24 operates with the clock signals of 6.75 MHz for example to generate the digital Y/U/V signals, respectively, in the same manner as in 100 Hz flickerless picture mode described above, though as an alternative, 8 MHz for example or other clock frequency may be chosen in accordance with system requirements. Therefore, the analog Y/U/V signals for each effective line scan duration of 52 µs or more are digitized into around 352 or more words in case of the clock signal of 6.75 MHz. The number of words are selected preferably as a multiple of four, for example 360 words. The clock signals for the ADCs 16 and 24 are synchronized with the horizontal and vertical synchronizing signals of the composite video signal for the picture I and the picture II, respectively.

The digital Y/U/V signals of each odd field IA and each even field IB for the picture I from the ADC 16 are then written into the field memory 17, alternately, for 20 ms. At the same time, the digital Y/U/V signals of each odd field IIA and each even field IIB for the picture II from the ADC 16 are, through the switch circuit S3, written into the field memory 22, alternately, for 20 ms. The write clock signals for the field memories 17 and 22 are also synchronized with the horizontal and vertical synchronizing signals of the composite video signal for the picture I and the picture II, respectively.

The digital Y/U/V signals of each field IA or IIB stored in the field memory 17 and the digital Y/U/V signals of each field IIA or IIB stored in the field memory 22 are then read out simultaneously according to the read clock signals having a predetermined frequency which has a certain relationship with the clock frequency of the write clock signals thereof, as explained below. More precisely, the digital Y/U/V signals are read out in such a linewise manner that the digital Y/U/V signals of each same line of each field of the picture I and each field of the picture II are alternately read out for the line scan duration. The read clock signals for the field memories 17 and 22 are synchronized with the horizontal and vertical synchronizing signals of the composite video signal for either the picture I or the picture II, in this case, the picture I.

To display two pictures in 100 Hz flickerless picture mode, especially in the A, A, B and B sequence as described above, the digital Y/U/V signals of each odd field IA of the picture I and each odd field IIA of the picture II are read out from the field memories 17 and 22 twice for each 20 ms, respectively, in the above described manner so that the digital Y/U/V signals of each line are read out for each 13 µs. While the digital Y/U/V signals of each odd field IA and each odd field IIA are read out from the field memories 17 and 22 for the second time, simultaneously the digital Y/U/V signals of each even field IB and each even field IIB from the ADCs 16 and 24 are written into the field memories 17 and 22 for each 20 ms, respectively. The digital Y/U/V signals of each even field IB and each even field IIB are then read out from the field memories 17 and 22 twice for each 20 ms, respectively, in the same manner as described above. This sequence is repeated every 20 ms. The digital Y/U/V signals from the the field memories 17 and 22 are supplied to the DAC 19. The analog Y/U/V signals from the DAC 19 are finally supplied to the dematrix circuit 26 to be converted into R/G/B signals which are supplied to the display apparatus 10. The display apparatus 10 scans horizontally each line at the line scan speed of 32 µs/line among which the effective line scan duration corresponding to the Y/U/V signals from the DAC 19 is 26 µs, the line frequency of 31.25 KHz and vertically each odd field twice for 20 ms and each even field twice for 20 ms at the field frequency of 100 Hz on its screen.

The clock and control signals for the additional components are also generated by the timing generator 20 and the micro processor 22 in synchronism with the horizontal and vertical synchronizing signals of the composite video signal selected by the AV switcher 5 in Fig. 1, which are supplied to the timing generator 20 and the micro processor 21 as shown in Fig. 2.

In this embodiment, the PAT mode (= Picture and Text mode) or the TAT mode (= Text and Text mode) can be selected from an on-screen menu displayed by manipulating certain keys of the remote controller 12 in a predetermined sequence. In the PAT mode, one motion or still video or television picture and one page of teletext picture from the same or different television station(s) can be simultaneously displayed side by side on the screen. In TAT mode, two different pages of teletext pictures from the same or different television station(s) can be simultaneously displayed side by side on the screen.

To realize the PAT mode, the R/G/B teletext signals for one page of teletext picture with a line frequency of 31,5 kHz and a field frequency of 100 Hz, generated by the teletext processor 15, have to be compressed into half the size in the horizontal direction in the signal processor 9, like a normal video picture, e.g. the picture II in the above described PAP mode by using the field memory 22 as a line memory.

To realize the TAT mode, the R/G/B teletext signals for two different pages of teletext pictures with a line frequency of 15,625 kHz and a field frequency of 50 Hz have to be compressed into half the size in the horizontal direction and the field frequency has to be doubled into 100 Hz in the signal processor 9 like normal video pictures, e.g. the two pictures I and II in the above described PAP mode by using the field memory 22.

As the R/G/B teletext signals represent either an ON or an OFF state corresponding to colours of characters to be displayed, no analog to digital conversion is necessary for the signals to be written into the field memory 22 and only level adaptations from the R/G/B level to TTL level and vice versa are sufficient. In this embodiment, therefore, the signal processor 9 further includes, as shown in Fig. 2, the level adaption circuit 27, the switch circuit S4, the level adaption circuit 28 and the switch circuit S5.

To obtain teletext picture(s) from the picture signal processor 9 in the PAT or TAT mode in 100 Hz flickerless picture mode without any picture quality deterioration, the R/G/B output signals of the teletext processor 15 are converted from R/G/B level (1,2 V pp) into TTL level by the level adaption circuit 27, before directly being supplied to the field memory 22 via the switch circuit S3. The signals are read out from the field memory 22 via the switch circuit S4 to be converted back into R/G/B level (1,2 V pp) by the level adaption circuit 28, before being supplied to the dematrix circuit 26 via the switch circuit S5.

The clock frequency of the R/G/B teletext signals from the teletext processor 15 is 24 MHz to transmit 480 pixels in each line. In the PAT or TAT mode, if data converted into the TTL level is written into the field memory 22 with the same frequency, it is necessary to read-out the data from the field memory 22 with the frequency of 48 MHz in order to compress the teletext picture(s) into half the size in the horizontal direction. However, if no higher frequency than 24 MHz is available for the read-out clock signal of the field memory 22, the frequencies of the write-in and read-out clock signals of the field memory 22 can be reduced to 12 MHz and 24 MHz, respectively, so that the data representing every second pixel in the horizontal direction, 240 pixels in total each line, is written into the field memory 22. Since two pixels in the horizontal direction of the teletext picture have the same information, there occurs no omission of the information. In the PAT mode, if the R/G/B teletext signals are obtained from the same television station which video picture is displayed side by side, the R/G/B teletext signals with the field frequency of 100 Hz have already the same field relationship with the video picture displayed with the field frequency of 100 Hz. If the R/G/B teletext signals are obtained from a television station different to the station which video picture is displayed, it may be necessary to control the field relationship in a similar manner to that shown in EP 0 717 562 A1. In the TAT mode, the data representing two different pages of teletext pictures of every odd or even field written into the field memory 22 with a field frequency of 50 Hz are read-out twice in a sequence of, for example, odd, odd, even, even from the field memory 22 to double the field frequency to 100 Hz. Since the data representing each line of the teletext picture occupies only 3 bits (for each pixel) multiplied by 240 (pixels) in the field memory 22, it is possible to write-in and read-out the data of two different pages of teletext pictures in one part and another part of the field memory 22, respectively.

The dematrix circuit 26 basically serves to convert the analog Y/U/V signals into R/G/B signals to be supplied to the display apparatus 10, shown in Fig. 1. However, when in PAT mode one video picture and one teletext picture should be displayed, the dematrix circuit 26 receives the Y/U/V signals for the video picture and the R/G/B signals for the teletext picture and generates therefrom the R/G/B signals for one video picture and one teletext picture to supply them to the display apparatus 10, which scans horizontally each line at a line scan speed of 32 µs/line, the line frequency of 31.25 KHz and vertically at the field frequency of 100 Hz on its screen. In TAT mode, the dematrix circuit 26 receives the R/G/B signals for two teletext pictures and generates therefrom the R/G/B signals for two teletext pictures to be supplied to the display apparatus 10.

The clock and control signals for the additional components and the dematrix circuit are also generated by the timing generator 20 and the micro processor 21 in synchronism with the horizontal and vertical synchronizing signals of the composite video signal selected by the AV switcher 5 in Fig. 1 and the text blanking signal and the text clock signal from the teletext processor 15, which are supplied to the timing generator 20 and the micro processor 21, as shown in Fig. 2.

In case of two different teletext pages from two different stations are displayed in TAT mode, the other field memory 17 can be used for storing the R/G/B teletext signals of the other station by using a similar configuration to the above to cover the timing difference in the synchronising signals of the two different stations.

In the TAT mode described above, the same functionality regarding the combination of the dual page mode and the page catching mode can be achieved, as described in the EP 0 656 727 A1.

Television receivers with the screen having a wide aspect ratio of 16:9 are becoming very popular now. If the television signal represents a picture having an aspect ratio of 16:9 in a letter box format, the picture can be displayed in the full size of a wide aspect screen of such a television, for example, by zooming. If the television signal is transmitted by the PALplus system which has been introduced recently, the picture can he displayed in the full size of the wide screen of a PALplus dedicated television receiver by scanning the full effective 575 lines.

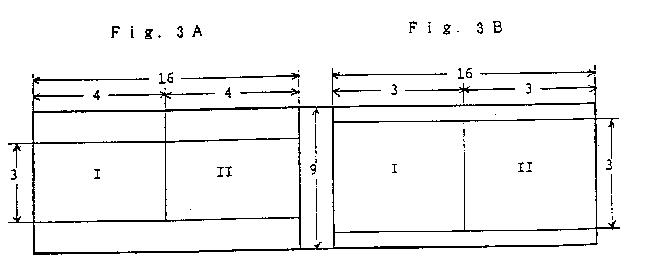

Figs. 3A and 3B show two examples using such a wide screen having an aspect ratio 16:9 for displaying two pictures. If two pictures I and II of the aspect ratio of 4:3 are simultaneously displayed in the correct picture geometry as shown in Fig. 3A, the clock frequency of the read clock signals for the field memories 17 and 22 and the clock signal for the DAC 19 is 27 MHz for example which is four times of 6.25 MHz and the picture height is compressed to 2/3 by adjusting the vertical deflection of the display apparatus 10, for example.

If each picture should be displayed in a larger size but in the correct picture geometry, It can be realized by cutting each picture at both left and right sides, decreasing the clock frequency of the read clock signals for the field memories 17 and 22 and the clock signal for the DAC 19 or increasing the clock frequency of the clock signal for the ADCs 16 and 24 and the write clock signals for the field memories 17 and 22 as much as each line length is shortened, and adjusting the vertical deflection of the display apparatus 10. For example, if two pictures I and II are simultaneously displayed in an aspect ratio of 3:3, respectively, as shown in Fig. 3B, each picture is cut by 1/8 at each side by not reading out the corresponding digital Y/U/V signals from the field memories 17 and 22. Accordingly, the clock frequency of the read clock signals for the field memories 17 and 22 and the clock signal for the DAC 19 maybe selected 27 MHz which is less than four times of the frequency 8 MHz of the clock signals for the ADCs 16 and 24 and the write clock signals for the field memories 17 and 22, and the picture height is compressed to 8/9 by adjusting the vertical deflection of the display apparatus 10. However, in the PAT or TAT mode, it may be necessary to display one or two pages of the teletext pictures without omission of the information. On the other hand, it is not so important to display teletext pictures in the correct geometry and any aspect ratio can be selected.

## Claims

1. TV receiver with teletext function, comprising:
television signal input circuit means (2, 3, 4) for receiving a television signal including a teletext data signal;
teletext processor means (15) for decoding the teletext data signal and obtaining analog R/G/B teletext signals:
picture signal processor means (9) for synchronizing two independent Y/U/V video signals and to change the line frequency and/or the field frequency of these signals with the help of two field memories (17, 22) by controlling the field memories (17, 22) to write the analog to digital converted Y/U/V video signals into said field memories (17, 22) at a first predetermined frequency and to read them out alternately linewise from said field memories (17, 22) at a second predetermined frequency,
display means (10) provided with the data read out from said field memories (17, 22) for displaying two pictures on a screen thereof, **characterized by**
first level adaptation means (27) to change the level of said analog R/G/B teletext signals into a level recognizable by at least one of said field memories (17, 22),
a first switch circuit (S3) provided before said at least one of said field memories (17, 22), to select either the analog to digital converted Y/U/V video signals or the level adapted analog R/G/B teletext signals to write them into said at least one of said field memories (17, 22) at a first predetermined frequency,
a second switch circuit (S4) provided behind said at least one of said field memories (17, 22), to select the data stored in said at least one of said field memories (17, 22) to be read out at a second predetermined frequency either via a digital to analog converter (DAC) or via a second level adaptation means (28), that changes the level of data stored in said at least one of said field memories (17, 22) into R/G/B level.

2. TV receiver according to claim 1, **characterized in that** said second switch circuit (S4) selects the data stored in said at least one of said field memories (17, 22) to be read out via a digital to analog converter (DAC) when the digital Y/U/V video signals are stored in said field memory (17, 22) and selects the data to be read out via said second level adaptation means (28) when level adapted R/G/B teletext signals are stored in said field memory (17, 22).

3. TV receiver according to claim 1 or 2, **characterized in tha**t said first predetermined frequency depends on the data rate of the data to be written into said respective field memory (17, 22).

4. TV receiver according to anyone of the preceding claims, c**haracterized in that** said second predetermined frequency depends on the field frequency to be used with said screen.

5. TV receiver according to anyone of the preceding claims, **characterized in that** said teletext processor means (15) supplies analog R/G/B teletext signals either with a line frequency of 31,5 kHz and a field frequency of 100 Hz for one page of teletext picture or with a line frequency of 15,625 kHz and a field frequency of 50 Hz for two different pages of teletext pictures at the same time.

6. TV receiver according to anyone of the claims 1 to 5, **characterized i**n **that** said display means (10) alternately linewise reads out a Y/U/V video signal from one of the field memories (17) and a R/G/B teletext signal from the other one of the field memories (22) to display the video picture and the page of teletext picture simultaneously on said screen.

7. TV receiver according to anyone of the claims 1 to 5, **characterized in that** said display means (10) alternately linewise reads out a R/G/B teletext signal for one page of teletext picture from one of the field memories (17) and a R/G/B teletext signal for another page of teletext picture from the other one of the field memories (22) to display two different pages of teletext pictures simultaneously on said screen.

8. TV receiver according to anyone of the claims 1 to 5, **characterized in that** said display means (10) alternately linewise reads out a R/G/B teletext signal for one page of teletext picture from one part of one of the field memories (17, 22) and a R/G/B teletext signal for another page of teletext picture from another part of said one field memory (17, 22) to display two different pages of teletext pictures simultaneously on said screen.

9. TV receiver according to anyone of the preceding claims, **characterized in that** said Y/U/V video signals are signals in PAL system each having the field frequency of 50 Hz.

10. TV receiver according to anyone of the preceding claims, **characterized in that** said two pictures displayed simultaneously on said screen are displayed at a field frequency of 100 Hz.

11. Method for displaying television pictures of a first and a second received picture signal, comprising the steps of:
storing the first picture signal in a memory at a first predetermined frequency in synchronism with the synchronizing signal of the first picture signal,
storing the second picture signal in a memory at a first predetermined frequency in synchronism with the synchronizing signal of the second picture signal,
reading out the first and the second picture signals alternately linewise from the memory at a second predetermined frequency in synchronism with a master synchronizing signal, and
displaying the pictures corresponding to the first and second picture signals simultaneously on a screen, **characterized in that**
said first and second picture signals can either be analog to digital converted Y/U/V video signals or level adapted analog R/G/B teletext signals.

12. Method according to claim 11, **characterized in that** said level adapted analog R/G/B teletext signals get adapted to TTL level.

13. Tv receiver with teletext function comprising:
signal input circuit means (2, 3, 4, 5, 6) for receiving at least a television signal including a teletext data signal;
signal converter means (7, 8, 9) deriving a first analog Y/U/V signal from the television signal or a R/G/B video input signal supplied to the input circuit means (2, 3, 4, 5, 6);
teletext processor means (15) for decoding the teletext data signal and obtaining a first analog R/G/B teletext signal;
two memory means (17, 22);
AD converter means (16) for receiving the first analog Y/U/V signal and providing one of said memory means (17, 22) with a digital Y/U/V signal converted from the first analog Y/U/V signal;
DA converter means (19) receiving the digital Y/U/V signal from the one of said memory means (17, 22) and deriving a second analog Y/U/V signal;
dematrix circuit means (26) for converting the second Y/U/V signal into a R/G/B video signal;
first level adaption means (27) for receiving the first analog R/G/B teletext signal and providing the other of said memory means (17, 22) with a level adapted R/G/B teletext signal with the signal level suitable to the other of said memory means (17, 22);
second level adaption means (28) for receiving the level adapted R/G/B teletext signal from the other of said memory means (17, 22) and deriving a second analog R/G/B teletext signal with a signal level similar to the signal level of the first analog R/G/B teletext signal;
control means (14, 20, 21) for writing the digital Y/U/V signal and the level adapted R/G/B teletext signal into said two memory means (17, 22) with first and second write clock signals and read the same from said two memory means (17, 22) with first and second read clock signals with a predetermined frequency(cies) higher than that of the first and second write clock signals;
display means (10) being supplied with the R/G/B video signal and the second analog R/G/B teletext signal for displaying at least two pictures corresponding to the R/B/G video signal and the second analog R/B/G teletext signal, respectively, side by side.
